# EUROPEAN PATENT APPLICATION

(11) **EP 1 695 749 A1**
(43) Date of publication of application: **30.08.2006**
(21) Application number: 05075474.6
(22) Date of filing: 28.02.2005
(51) Int. Cl.: A63F 13/12, H04L 12/58, H04L 29/06

(54) **Device and method for the provisioning of personal service hosting**

(71) Applicant: Koninklijke KPN N.V., 2516 CK The Hague (NL)
(72) Inventor: Van Steenbergen, Ate Sander, 9737 NN Groningen (NL); Keijzer, Herman, 9727 DN Groningen (NL)
(74) Representative: Wuyts, Koenraad Maria

(57) **Abstract**

It is disclosed that a personal service box (1) comprising a housing, one or more connection interfaces for connecting peripheral equipment, a connection interface for connecting a communication link (7), and an electrical circuit (11) can be used for providing services to an end-user. The personal service box (1) is connected via the communication link (7) to a public communications network (5) for the communication with a personal service host (6) that is connected to the communications network (5) via a communication link (8). The electrical circuit (11) enables the conversion between a signal related to peripheral equipment that is connected to the personal service box (1) and a signal related to a communication protocol that is used on telecommunication link (7).

## Description

### FIELD OF THE INVENTION

The present invention relates to a device and a method for the provisioning of personal services hosting via a public communications network.

### BACKGROUND OF THE INVENTION

There have been many developments in relation to the hosting of computer related applications, whereby the applications reside on a host like device at a central location. End-users can access these applications via an end-user device such as a personal computer. The concept whereby applications running on a central host can be accessed via an end-user device is a very generic one. Many variations on this concept have been put in practise. For instance, in a LAN (Local Area Network) environment end-user devices are connected via, for example, an Ethernet network to a host.

Relating to the concept mentioned here, there have been also developments in order to simplify the end-user devices in terms of the hardware, firmware and software that is required in the end-user device. This can be desirable from different points of view. For instance, it can be advantageous for end-users with little understanding of computers to use an end-user device that has a (very) simple architecture. A simple architecture may be user-friendlier but also cheaper. Also from the point of view of a service organization that services and maintains end-user devices a simple architecture of the end-user device may be profitable. More hardware and software will in such a situation reside centrally instead of locally, which is easier from an operational point of view.

In the prior art end-user devices are known that do (nearly) not comprise any computing facilities such as microprocessors and storage devices such as hard-discs. As a consequence, also no or only little software is comprised by these types of end-user devices. These types of end-user devices can be connected via a private network to a centrally located host on which one or more applications reside. However, a disadvantage of the prior art is that the network that is used to connect the end-user device to the central host is a private communications network. A consequence is that the end-user device is dedicated to the characteristics of the specific private communications network that is used. A consequence of this is, amongst others, that a specific end-user device cannot be used on forehand together with another type of communications network.

### AIM OF THE INVENTION

It is an object of the invention to eliminate the drawbacks of the prior art and to provide a system, a device and a method for the provisioning of personal service hosting via a public communications network.

### SUMMARY OF THE INVENTION

In accordance with this invention, a personal service box and a method are disclosed, the personal service box comprising:
a housing, one or more connection interfaces for connecting peripheral equipment, a connection interface for connecting a communication link, and an electrical circuit whereby the personal service box is connected via the communication link to a public communications network for the communication with a personal service host that is connected to the communications network via a communication link, and via which personal service box a service can be provided by the personal service host to an end-user whereby the electrical circuit enables the conversion between a signal related to peripheral equipment that is connected to the personal service box and a signal related to a communication protocol that is used on the telecommunication link.

In a first aspect of the invention is disclosed that a personal service box can be used for providing services to an end-user. The architecture of the personal service box is relatively simple compared to for instance a personal computer. One or more peripheral devices can be connected to the personal service box, and the personal service box can also be connected via a communication link to a public communications network. An electrical circuit is comprised by the personal service box for the conversion between the signals appropriate to the peripheral devices connected to the personal service box on the one hand and the signals that relate to the protocol that is used over the communication link on the other hand.

The public communications network can be any type of network such as a PSTN (Public Switched Telephone Network) network, ISDN (Integrated Services Digital Network), a broadband network or a mobile network (e.g. GSM network or UMTS network). There are no limitations in relation to the protocol that is used over the communication link. The protocol can for instance be IP (Internet Protocol), ATM (Asynchronous Transfer Mode) or GPRS (General Packet Radio Service). It may also the case that the public communications network (5) is comprised by different types of networks. For instance, the public communications network (5) may consist of an ISDN network and a broadband network. In this particular case the broadband network is available to the user via the ISDN network. Also other kinds of network types may exist together.

Another aspect of the invention is that also a personal server host is connected to the public communications network. The personal server host resides in general at a central location and is connected to the public communications network via a communications link. The personal server host is a computer-based system. The personal server host may comprise one or more CPU's (central processing unit), a memory, I/O (input/output) means, an operating system, and one or more applications. Via the personal server box the end-user can access services that are hosted by the personal service host such as e-mail services, Internet access, file storage services, HTTP (Hypertext Transfer Protocol) related services, gaming, and video- or audio streaming services.

According the present invention there may also be (de-)compression means comprised by the personal service box. In that case the data that results from the conversion process carried out by the service box is compressed before it is sent via the public communications network to the personal server host. When the compressed data is received by the personal server host it is decompressed before it is processed by the personal server host. The (de-)compression means may for instance reside at a ROM (Read Only Memory) that is comprised by the personal service box.

In relation to compression many different embodiments may occur. For instance, it may be possible that no compression is applied to data that is sent from the personal service box to the personal service host, while compression is applied to data that is sent from the personal service host to the personal service box. Thus, data sent from the personal service host is compressed by the personal service host and decompressed at the personal service box. Data sent from the personal service box is not compressed, so it is not needed to decompress data at the personal service host. Such an embodiment may for instance efficient if the amount of data that is sent from the personal service box is small compared to the amount of data that is sent from the personal service host.

An advantage of the present invention is that little knowledge of the end-user is required relating to computer equipment and -applications. The hardware and software of the personal service box is in general simple compared to that of a personal computer that is commonly used at the end-user premise. Another advantage of the present invention is that the service and maintenance is relatively easy. For instance, it is not needed to download updates of software releases to the end-user equipment, since the applications are residing at the personal server. The installation of new software releases can be done by the provider without this is being noticed by the end-user. It is also an advantage that the end-user of the personal service box does not need to concern with all sorts of security issues. Security issues are dealt with by the provider that maintains the personal server host.

### BRIEF DESCRIPTION OF THE DRAWING FIGURE

The foregoing aspects and many of the attendant advantages of this invention will become better understood by reference to the following detailed description, when taken in conjunction with the accompanying drawing, wherein:

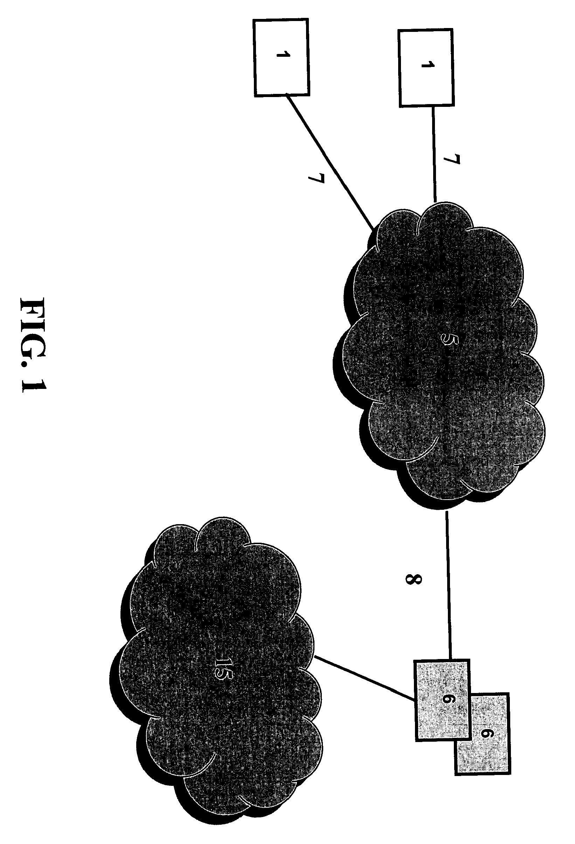

FIG. 1 is a block diagram illustrating the concept for providing services via a personal service box (1) and a public communications network (5).

### EXEMPLARY EMBODIMENTS

For the purpose of teaching of the invention, preferred embodiments of the method and devices of the invention are described in the sequel. It will be apparent to the person skilled in the art that other alternative and equivalent embodiments of the invention can be conceived and reduced to practice without departing form the true spirit of the invention, the scope of the invention being limited only by the appended claims as finally granted.

FIG.1 shows a conceptual picture of a configuration in which a personal service box (1) can be used by an end-user. The personal service box (1) may be comprised of a housing, one or more connection interfaces for connecting peripheral equipment, a connection interface for connecting a communication link (7) and an electrical circuit (11) that in general resides inside the housing. A connection interface may for instance be a socket, but it may also be an interface such as an infrared interface. The electrical circuit (11) may comprise an IC (Integrated Circuit) or a ROM (Read Only Memory). The electrical circuit (11) may or may not comprise an operating system. However if an operating system is comprised, the architecture of such an operating system will be in general less complex that an operating system comprised by a personal computer.

There may also be comprised by the personal service box (1) another memory for relatively simple purposes such as the storage of user related data. Peripheral equipment that may be connected to the personal service box (1) is for example a screen (2). The screen (2) can be any type of screen such as a cathode ray tube (CRT), a flat-screen or video monitor. There may also be connected to the personal service a key-board (3) and a mouse (4). The connection between the personal service box (1) and for instance a mouse (4) may be wired or wireless. In the latter case the connection may for instance be realized via the Bluetooth communications protocol.

The personal service box (1) is connected via the communication link (7) to a public communications network (5). The public communications network (5) can be any type of network such as a PSTN (Public Switched Telephone Network) network, ISDN (integrated Services Digital Network), a broadband network or a mobile network (e.g. GSM network or UMTS network). In the case that the communications network (5) is a broadband network, the communication link (7) can for instance be an ADSL (Asymmetric Digital Subscriber Line) connection. There are no limitations in relation to the protocol that is used over the communication link (7). The protocol can for instance be IP (Internet Protocol), ATM (Asynchronous Transfer Mode) or GPRS (General Packet Radio Service).

By the service box (1) the signals to and from the peripheral equipment that is connected to the service box (1) have to be converted into signals to that are transported via the service box (1) over the communication link (7). For instance, if the IP protocol is used for the communication via the service box (1) data transmitted to the service box (1) may be converted into a signal that is appropriate to be supplied to the screen. By the screen this signal is then presented to the user as visual information. Conversion may also take place for a signal that is received from a peripheral device. The signal may be converted into data that is appropriate to be supplied to, for instance, the IP protocol.

Conversion may be accomplished by conversion means such as conversion software residing in a ROM that may be comprised by the electrical circuit (11). There may also be a protocol stack comprised be the electrical circuit (11). In general, the connection interface for connecting the personal service box (1) to the communication link (7) may be such that it is compliant to the communication protocol that is used over the communication link (7). For instance, if IP is used then the connection interface is an IP connector.

It may also be the case that the public communications network (5) is comprised by different types of networks. For instance, the public communications network (5) may consist of an ISDN network and a broadband network. In this particular case the broadband network is available to the user via the ISDN network. Also other kinds of network types may exist together.

Also connected to the public communications network (5) is a personal server host (6). The personal server host (6) resides at a central location and is connected to the public communications network (5) via a communications link (8). The personal server host (6) is a computer-based system. The personal server host (6) may comprise one or more CPU's (central processing unit), a memory, I/O (input/output) means, an operating system, and one or more applications. Via the personal server host (6) one or more services may be available to the end-user such as e-mail services, Internet access, file storage services, HTTP (Hypertext Transfer Protocol) related services, gaming, video- or audio streaming services and the usage of different types of applications. In order to have these services available, the end-user in general needs to have a subscription to one ore more communications services that are provided via the public communications network (5). An advantage of this invention is that the provider of the services that are available via the personal server host (6) can be another provider than the provider of the communications network (5). However, it may also be the case that the provider of the communications network (5) is the same as the provider of the services accessible via the personal server host (6). The personal server host (6) may also be connected to a communication network (15), as is depicted in FIG. 1. The communication network (15) can be any type of network such as but not limited to Internet, a mobile network, a private network.

In an embodiment of the present invention the signal that originates from peripheral equipment that is connected to the personal service box (1) such as a keyboard or a mouse due to data that is entered by an end-user via that peripheral equipment is first converted by conversion means comprised by the personal service box (1) into a data signal that is appropriate to the communication protocol that is used over communication link (7). For example if the communication protocol is IP, then the data signal may comprise IP data packets. After this, the data signal is sent via communication link (7), the communications network (5) and communication link (8) to the personal server host (6) where it is processed. The processed data signal is then sent back to the personal service box (1) where the processed data signal is converted into a signal that is appropriate to be supplied to peripheral equipment (such as a screen) that is connected to the personal service box (1) where it is presented to the user, in case the peripheral equipment is a screen, as visual information. There may be many ways of presenting information to the end-user of the personal service box (1). For instance, information may be presented as audio information via a speaker. It may even be possible that mechanical information is presented to the end-user, for instance when a peripheral device is able to move upon the receipt of a signal.

In general the communication protocol used over communication link (7) will be the same as the communication protocol that is used over communication link (8). However, it may also be the case that the communication protocols are not the same, for example if there are protocol conversion means in communications network (5).

According the present invention there may also be compression means comprised by the personal service box (1). In that case the data that results from the conversion process in the service box (1) is compressed before it is sent via communication link (7) to the personal server host (6). When the compressed data is received by the personal server host (6) it is decompressed before it is processed by the personal server host (6).

An advantage of the present invention is that little knowledge of the end-user is required relating to computer equipment and -applications. The hardware and software of the personal service box (1) is in general simple compared to that of a personal computer that is commonly used at the end-user premise. A consequence of this may be that end-users such as elderly persons or children also could make use of the service box (1). Another consequence may be that it is more appealing to use at public places, such as Internet cafés, a service box (1) instead of a personal computer.

Another advantage of the present invention is that the service and maintenance is relatively easy. For instance, it is not needed to download updates of software releases to the end-user equipment, since the applications are residing at the personal server (8). The installation of new software releases can be done by the provider without this is being noticed by the end-user. It is also an advantage that the end-user of the personal service box (1) does not need to concern with all sorts of security issues. Security issues are dealt with by the provider that maintains the personal server host (6).

In order to make use of the services available via the personal service host (8), the end-user has to log-in to the personal service host (8). The personal service box (1) can be configured in such a way that the log-in procedure automatically starts when the personal service box (1) is switched on. One or more authentication and authorization procedures may be comprised by the log-in procedure. In the log-in procedure, it may be possible that a user profile is used to determine which services the end-user is allowed to use.

## Claims

1. A personal service box (1) comprising a housing, one or more connection interfaces for connecting peripheral equipment, a connection interface for connecting a communication link (7), and an electrical circuit (11) whereby the personal service box (1) is connected via the communication link (7) to a public communications network (5) for the communication with a personal service host (6) that is connected to the communications network (5) via a communicaton link (8), and via which personal service box (1) a service can be provided by the personal service host (6) to an end-user whereby the electrical circuit (11) enables the conversion between a signal related to peripheral equipment that is connected to the personal service box (1) and a signal related to a communication protocol that is used on the communication link (7).

2. A personal service box (1) according to claim 1, whereby the electrical circuit (11) comprises a ROM (Read Only Memory).

3. A personal service box (1) according to claim 1, whereby the peripheral equipment is a screen, a keyboard or a mouse.

4. A personal service box according to claim 1, 2 or 3, whereby the personal service box (1) comprises compression means.

5. A method for providing personal service hosting whereby an end-user connects via a personal service box (1) according to any of the preceding claims, a communication link (7), a public communications network (5) and a communication link (8) to a personal service host (6), after which a service can be provided to the end-user.

6. A method according to claim 5 whereby the personal service host (6) is a computer device that resides at another physical location than the personal service box (1).

7. A method according to claim 6, whereby the personal service host (6) comprises one or more CPU's (central processing units), a memory, l/O (input/output) means, an operating system, and one or more applications.

8. A method according to claim 5, 6 or 7, whereby said service is an e-mail service, an Internet access service, a file storage service, an HTTP (Hypertext Transfer Protocol) related service, a gaming service, or a video or audio streaming service.

9. A method according to claim 5, 6, 7 or 8, whereby the service is provided to the end-user according to a user-profile relating to the end-user.
